# EUROPEAN PATENT APPLICATION

(11) **EP 0 721 745 A2**
(43) Date of publication of application: **17.07.1996**
(21) Application number: 95104585.5
(22) Date of filing: 28.03.1995
(51) Int. Cl.: A41D 13/02

(54) **Clothing for clean rooms**

(30) Priority: 16.01.1995 JP 22314/95
(71) Applicant: SAN-M Package Co., Ltd., Haibaragun, Shizuoka (JP)
(72) Inventor: Miyake, Takao, Haibaragun, Shizuoka (JP)
(74) Representative: Hering, Hartmut, Dipl.-Ing.

(57) **Abstract**

Clean garments put on in the clean room having the following elements.

The elements are each part of right arm portion (10A etc.) which is respectively made by synthetic textile, the unit of right front body (10C1), right back body (10D1), left front body (10C2) and left back body (10D2) joined with heat bonding, which unit is turned down on the position corresponding to the right and left ankles, turned down portions of which unit are joined with heat bonding, fasteners (F) which are each joined to said right and left front bodies (10C1) and (10C2), with heat bonding, right arm portion (10A) and left arm portion (10B) which are each joined to said unit with heat-bonding, and are respectively turned down on the position corresponding to the right and left wrists, turned down portions of which arm portions (10A and 10B) are joined with heat bonding, collar portion (10E) which is joined to said unit with heat bonding, on the position corresponding to the neck, and patterns (P1 and P2) which are each formed on the area including a joining portion (S) of said part, respectively consisting of a concave portion and, convex portions at both sides of the concave portion.

## Description

The present invention relates to clean garments.

More particularly, it relates to clean garments put on in the clean room of semiconductor manufacturing factory etc..

Conventionally, it is well known that the products of various fields of industry are manufactured in the clean room.

Especially, in the semiconductor manufacturing industry, a super clean room in the first class is used, wherein a particle having the size of submicron should be one in the air of 1 cubic foot.

In a clean room in which such a high cleanness is desired, clean garments must be put on in order to remove pollution source of dust etc..

The above clean garments should have airtight seam, in order to fulfill two functions of not releasing out dust from inside to outside and not releasing off dust from cloth of clean garments.

The conventional clean garments, which must have airtight seam, has been produced with sewing thread, the problems of which clean garments are as follows.
(1)Dust is released out through holes formed on cloth of clean garments.
   That is to say, since the conventional clean garments has been produced with sewing thread, a hole is always formed on cloth of them at an interval of sticking a needle into cloth, through which hole a needle passes.
   However, when the conventional clean garments with such a hole is put on, dust is released out through this hole.
   Concequently, the clean room is polluted with dust.
(2)Waste thread is generated.
   That is to say, when the conventional clean garments produced with sewing thread is put on, waste thread is generated, during putting on this clean garments.
   Concequently, the clean room is polluted with waste thread.
   Moreover, while the conventional clean garments produced with sewing thread is put on, sewing thread and cloth are rubbed together.
   Concequently, since waste thread is generated, the clean room is polluted with it.
(3) It is necessary to use many processes.

That is to say, as above-mentioned, since the conventional clean garments is produced with sewing thread, the desired sewing thread should be always used regarding one clean garments.

Accordingly, it is necessary to be provided with processes of preparing sewing thread and checking quality of it etc..

Concequently, it is necessary to use many processes related to sewing thread.

As apparently from the above-mentioned items (1) to (3), the conventional clean garments have the problems that airtightness is low, and that processes for producing them are many in number.

An object of the present invention is to increase airtightness of clean garments and to reduce the number of processes for producing them, by joining each part of them with heat bonding.

The above-mentioned object can be achieved by clean garments put on in the clean room comprising each part of right arm portion etc. which is respectively made by synthetic textile, the unit of right front body, right back body, left front body and left back body joined with heat bond ing, which unit is turned down on the position corresponding to the right and left ankles, turned down portions of which unit are joined with heat bonding, fasteners which are each joined to said right and left front bodies and with heat bonding, right arm portion and left arm portion which are each joined to said unit with heat bonding, and are respectively turned down on the position corresponding to the right and left wrist, turned down portions of which arm portions and are joined with heat bonding, collar portion which is joined to said unit with heat bonding, on the position corresponding to the neck; and patterns and which are each formed on the area including a joining portion of said part, respectively consisting of a concave portion and, convex portions at both sides of the concave portion.

### BRIEF DESCRIPTION OF THE DRAWINGS

Further features and advantages of the present invention will be apparent from the ensuring description with reference to the accompanying drawings, wherein:
Fig. 1 is a drawing of an embodiment of the present invention;
Figs. 2A to 2F are drawings of methods for joining parts of clean garments in accordance with the present invention;
Figs. 3A to 3E are detailed drawings of a method for joining parts of clean garments in accordance with the present invention; and
Fig. 4 is a drawing of an apparatus for joining parts of clean garments in accordance with the present invention.

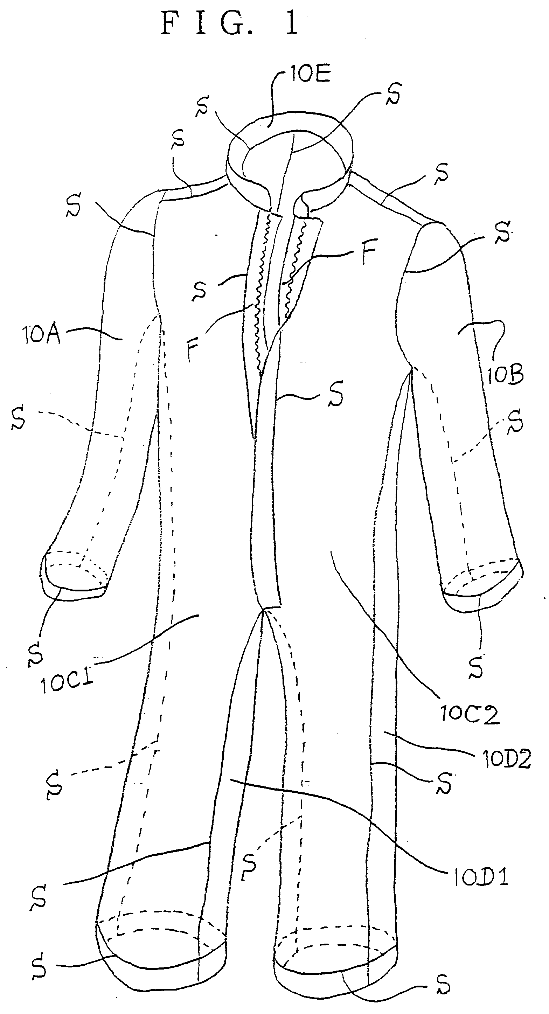

Figure 1 is a drawing of an embodiment of the present invention, wherein reference numeral 10A shows right arm portion, 10B left arm portion, 10C1 right front body, 10C2 left front body, 10D1 right back body, 10D2 left back body, and 10E collar portion.

Clean garments as shown in Fig. 1 is put on in the clean room of semiconductor manufacturing factory etc..

Generally, clean garments are divided broadly into separate type that a upper garment and a pair of trousers are separate, and overall type that they are overall in one unit.

Clean garments as shown in Fig. 1 is the above overall type.

Each part of the above right arm portion 10A etc. is made by synthetic textile to be joined with heat bonding.

Moreover, Each part of the above right arm portion 10A etc. is joined by means of bonding respective end portions with heat, joining portion of which part is shown with reference numeral S in Fig. 1.

End portions of right arm portion 10A and left arm portion 10B are joined with heat bonding, and they are turned down on the position corresponding to the right and left wrist, which portion turned down is joined with heat bonding.

Right front body 10C1 and right back body 10D1 are joined with heat bonding on the position corresponding to the right shoulder, right body side to leg outside, and right leg inside, respectively, as shown in Fig. 1.

The unit of right front body 10C1 and right back body 10D1 joined in such a manner is turned down on the position corresponding to the right ankle, which portion turned down is joined with heat bonding, as well as it is joined to right arm portion 10A with heat bonding.

On the other hand, left front body 10C2 and left back body 10D2 are joined with heat bonding on the position corresponding to the left shoulder, left body side to leg outside, and left leg inside, respectively, as shown in Fig. 1.

The unit of left front body 10C2 and left back body 10D2 in such a manner is turned down on the position corresponding to the left ankle, which portion turned down is joined with heat bonding, as well as it is joined to left arm portion 10B with heat bonding.

Moreover, as shown in Fig. 1, right back body 10D1 and left back body 10D2 are joined with heat bonding, on the position corresponding to the central portion of the back.

In such an above manner, right arm portion 10A, left arm portion 10B · · · of parts constituting clean garments become to the unity, to which unity of right front body 10C1, left front body 10C2, right back body 10D1 and left back body 10D2, collar portion 10E is joined with heat bonding, on the position corresponding to the neck.

On the position corresponding to the central portion of the breast to abdomen, fasteners F are each joined to right front body 10C1 and left front body 10C2, with heat bonding.

When the fasteners F are opened, clean garments can be put on by taking both legs into it.

As after-mentioned, concretly, patterns P1 etc. are formed on the area including the joining portion S, which patterns P1 etc. consist of a concave portion and, convex portions at both sides of the concave portion.

The concave portion is thinner than the other portion and is formed in film, whereby the joined area has flexibility.

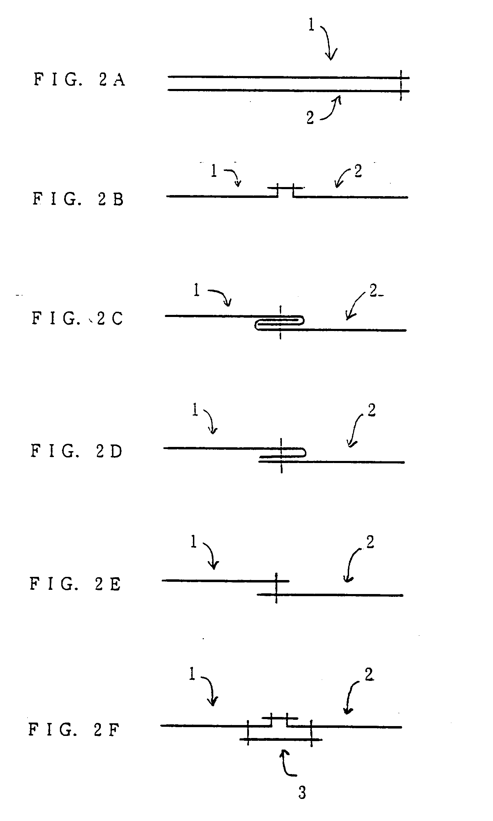

Methods for joining parts of clean garments are various ones, as shown in Figs. 2A to 2F.

Of parts 10A, 10B · · · of clean garments, ones joined with heat bonding are designated, as a matter of convenience, to be a first part 1 and a second part 2, in Figs. 2A to 2F.

Fig. 2A shows a method for placing first and second parts 1 and 2 one on top of the other, so that respective end portions are superimposed, and joining with heat bonding the above superimposed portions.

Fig. 2B shows a method for superimposing respective end portions of first and second parts 1 and 2 after the end portions are made to be projected upwards, and joining with heat bonding the superimposed portions.

Fig. 2C shows a method for superimposing respective end portions of first and second parts 1 and 2 after the end portions are made to be each turned down , and joining with heat bonding the superimposed portions.

Fig. 2D shows a method for superimposing respective end portions of first and second parts 1 and 2 after only one of the end portions are made to be each turned down, and joining with heatbonding the superimposed portions.

Fig. 2E shows a method for superimposing respective end portions of first and second parts 1 and 2 , and joining with heatbonding the superimposed portions.

Fig. 2F shows a method for superimposing respective end portions of first and second parts 1 and 2 after the end portions are made to be projected upwards, and joining with heat bonding the superimposed portions as well as joining with heat bonding a reinforcement part 3 to first and second parts 1 and 2 including the above superimposed portions.

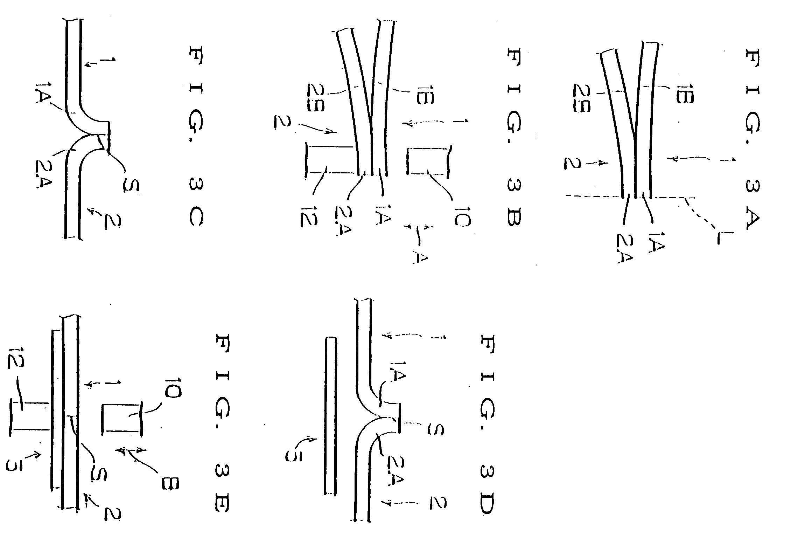

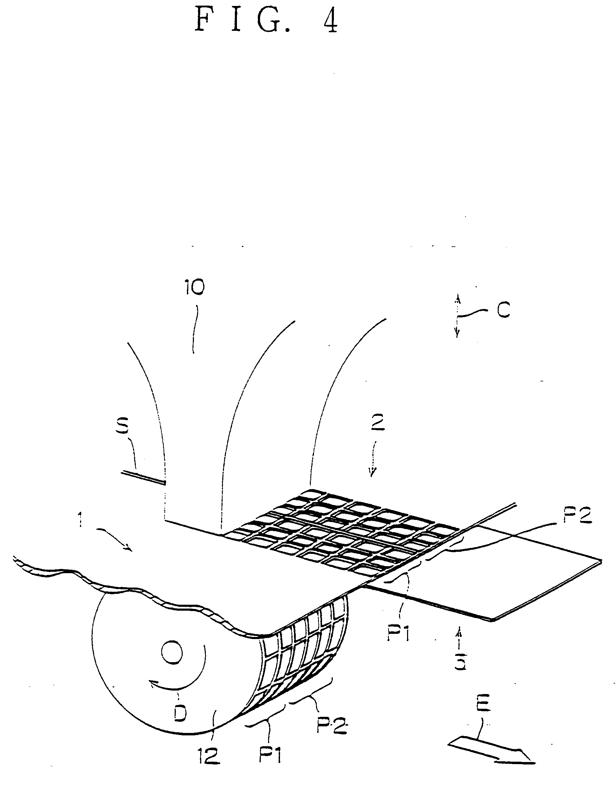

Of methods for joining with heat bonding as shown in Fig. 2A to 2F, a method of Fig. 2F has the effect that the joining strength of the product manufactured is increased, which method of Fig. 2F will be explained hereinafter in process order, based on Fig. 3A to 3E.
(1)At first, the same sides of the first and second parts 1 and 2 are placed opposite each other, and end portions 1A and 2A are superimposed thereof.
   That is to say, as shown in Fig.3A, the same sides 1B and 2B of the first and second parts 1 and 2 are placed opposite each other.
   Thereafter, the end portions 1A and 2A of the first and second parts 1 and 2 are superimposed by arranging the head portions L thereof.
(2)Next, the superimposed end portions 1A and 2A are joined with heat bonding.
   Taking the means of heat bonding as an example, there is an apparatus for joining parts as shown in Fig.4, said apparatus taking advantage of super-sonic waves.
   That is to say, as shown in Fig.3B, after superimposed end portions 1A and 2A are placed on an anvil 12, super-sonic wave vibration is applied to them to the vertical directions shown by arrow A, with a horn 10 under constant pressure.
   Accordingly, the end portions 1A and 2A may be joined with heat bonding.
(3)The above first and the second parts 1 and 2 are then opened at joining portion S of the end portions 1A and 2A.
   That is to say, as shown in Fig.3C, with the joining portion S as the central figure, the first and the second parts 1 and 2 are opened.
   In this case, the joining portion S projects slightly upwards as shown in Fig.3C.
(4)A reinforcement part 3 is applied to, extending over the first and second parts 1 and 2, along the longitudinal direction of the joining portion S.
   That is to say, as shown Fig.3D, the reinforcement part 3 is applied to, extending over the first and second parts 1 and 2 in the opening state, along the longitudinal direction of the joining portion S with it as the central figure.
   This reinforcement part 3 may be made from the same material as the first and second parts 1 and 2.
   However, it is preferable that it is thinner than the first and second parts 1 and 2 in order to increase the flexibility of the seam formed by the end portions 1A and 2A and the joining portion S.
(5)Finally, the reinforcement part 3 is made to join, via heat bonding, to the first and second parts 1 and 2 including the joining portion S.

Concretly, as shown in Fig.3E, the first and second parts 1 and 2, with the reinforcement part 3 applied thereto, are placed on the anvil 12.

From above parts 1 and 2, super-sonic wave vibration is applied in the vertical direction, as shown by arrow B, with a horn 10 under constant pressure.

Thereby, not only are the first and second parts 1 and 2 directly joined as shown in Fig.3B, but also they are joined with the reinforcement part 3 as shown Fig.3E.

Accordingly, the joining strength of the product manufactured has been increased.

Figure 4 shows an example of an apparatus for producing clean garments in accordance with the present invention, which apparatus is one for joining parts with super-sonic wave bonding.

In Fig.4, reference numeral 10 is a horn, 12 is an anvil.

As is well known, the horn 10 is a vibrator which is vibrated by super-sonic waves, and the anvil 12 is a pedestal on which an object, to be bonded with heat by using the above super-sonic waves, is placed.

The horn 10 is vibrated to the vertical direction as shown with arrow C, by a super-sonic wave oscillator at the desired frequency.

The anvil 12 may be rotatable to the clockwise direction as shown with arrow D, on the outer surface of which anvil 12 patterns P1 and P2 are formed.

That is to say, the anvil 12 is a knurled anvil.

By replacing the anvil 12, it is possible to form via heat bonding the joining area with patterns in different designs.

Generally, after an object is inserted between the horn 10 and the anvil 12, super-sonic wave vibration in the virtical direction is applied by the horn 10 to the object under constant pressure, whereby heat bonding is carried out owing to the generation of heat.

Concequently, patterns P1 and P2 formed on the anvil 12 appear on the object.

The above general explanation will be hereinafter described in detail based on an example as shown in Fig. 4.

In Fig. 4, an object is inserted between the horn 10 and the anvil 12.

The object is composed of the first and second parts 1 and 2 in the opening state with the joining portion S as the central figure, and the reinforcement part 3 applied along the longitudinal direction of the joining portion S, extending over the first and second parts 1 and 2.

At first, the first and second parts 1 and 2 are placed on the anvil 12 with the reinforcement part 3 applied to them along the longitudinal direction of the joining portion S.

Next, super-sonic wave vibration in the vertical direction C is applied by the horn 10 to the object under constant pressure, whereby heat bonding is carried out owing to the generation of heat.

Meanwhile, the anvil 12 rotates in the direction as shown by arrow D, and accordingly the above object inserted between the horn 10 and the anvil 12 is carried in the direction as shown with arrow E.

Consequently, as shown in Fig. 4, patterns P1 and P2 are formed on the first and second parts 1 and 2 with the joining portion S as the central figure, which patterns P1 and P2 are the same as the patterns P1 and P2 of the anvil 12.

As afore-mentioned, according to the present invention, as shown in Fig 1., there are provided clean gagarments put on in the clean room comprising each part of right arm portion 10A etc. which is respectively made by synthetic textile, the unit of right front body 10C1, right back body 10D1, left front body 10C2 and left back body 10D2 joined with heat bonding, which unit is turned down on the position corresponding to the right and left ankles, turned down portions of which unit are joined with heat bonding, fasteners F which are each joined to said right and left front bodies 10C1 and 10C2, with heat bonding, right arm portion 10A and left arm portion 10B which are each joined to said unit with heat bonding, and are respectively turned down on the position corresponding to the right and left wrist, turned down portions of which arm portions 10A and 10B are joined with heat bonding, collar portion 10E which is joined to said unit with heat bonding, on the position corresponding to the neck; and patterns P1 and P2 which are each formed on the area including a joining portion S of said part, respectively consisting of a concave portion and, convex portions at both sides of the concave portion.

According to the above constitution, each part made by synthetic textile, is respectively joined with heat bonding.

Hence, clean garments in accordance with the present invention have no hole through which a needle passes, and accordingly, dust cannot be released out from inside to outside.

Concequently, the clean room is not polluted with dust.

Next, since clean garments in accordance with the present invention are produced by not using sewing thread, waste thread is not generated during putting on this clean garments.

Concequently, the clean room is not polluted with waste thread.

Moreover, since clean garments in accordance with the present invention are produced without processes related to sewing thread, and are produced without limit by only one heat bonding apparatus, the number of processes for producing them has been reduced.

That is to say, the present invention has the technical effect to increase airtightness of clean garments and to reduce the number of processes for producing them, by joining each part of them with heat bonding.

## Claims

1. Clean garments put on in the clean room comprising:
each part of right arm portion (10A) etc. which is respectively made by synthetic textile;
the unit of right front body (10C1), right back body (10D1), left front body (10C2) and left back body (10D2) joined with heat bonding, which unit is turned down on the position corresponding to the right and left ankles, turned down portions of which unit are joined with heat bonding;
fasteners (F) which are each joined to said right and left front bodies (10C1) and (10C2), with heat bonding;
right arm portion (10A) and left arm portion (10B) which are each joined to said unit with heat bonding, and are respectively turned down on the position corresponding to the right and left wrist, turned down portions of which arm portions (10A) and (10B) are joined with heat bonding;
collar portion (10E) which is joined to said unit with heat bonding, on the position corresponding to the neck; and
patterns (P1 and P2) which are each formed on the area including a joining portion (S) of said part, respectively consisting of a concave portion and, convex portions at both sides of the concave portion.

2. Clean garments according to claim 1,
wherein said part is joined each other with heat bonding by a super-sonic wave apparatus having horn (10) and anvil (12), on outer surface of which anvil (12) said patterns (P1 and P2) are formed.
